# EUROPEAN PATENT SPECIFICATION

(11) **EP 3 870 004 B1**
(45) Date of publication and mention of the grant of the patent: **20.11.2024**
(21) Application number: 19875307.1
(22) Date of filing: 14.10.2019
(51) Int. Cl.: A47J 27/21

(54) **KETTLE**
WASSERKOCHER
BOUILLOIRE

(30) Priority: 23.10.2018 AU 2018904019
(43) Date of publication of application: 01.09.2021
(73) Proprietor: Breville Pty Limited, Alexandria, New South Wales 2015 (AU)
(72) Inventor: FRYER, Scott, Bourke Road Alexandria, New South Wales 2015 (AU); TOFAILI, Ali, Alexandria, New South Wales 2015 (AU); PSAROLOGOS, Con, Bourke Road Alexandria, New South Wales 2015 (AU); REN, Xiang, Bourke Road Alexandria, New South Wales 2015 (AU)
(74) Representative: Papa, Elisabetta
(86) International application number: PCT/AU2019/051111
(87) International publication number: WO 2020/082111

(56) References cited:
- WO-A1-2020/198788
- WO-A1-96/25869
- CN-A- 105 725 776
- CN-A- 105 832 143
- CN-A- 105 832 143
- CN-A- 108 652 439
- CN-A- 108 652 439
- CN-A- 108 670 024
- CN-U- 204 363 735
- GB-A- 2 322 273
- GB-B- 2 353 456
- JP-A- 2015 231 473

## Description

### Field

This invention relates to a kettle.

### Background

Kettles are well-known devices to rapidly boil water for, for example, making tea, cooking, or the like. A disadvantage of presently known kettles is that as water is heated by a heating element, a small quantity of water close to the heating element is heated to above its boiling point. The quantity of water changes phase to steam and collects as a steam bubble at a steam bubble initiation site, usually a surface imperfection. As the steam bubble has a lower density than water the steam bubble rises due to buoyancy. As the steam bubble rises, the temperature of the surrounding water is below boiling temperature, causing the steam bubble to also cool down below boiling temperature. As the steam bubble cavitates, significant sound waves are created. The noise caused by the cavitation is undesirable in a home environment. It is very difficult to spread the heat over a kettle surface of a tube heating element of the kind used in a variety of kettles. Therefore, water adjacent the tube heating element tends to heat up faster as opposed to water away from it creating an imbalance in temperature and magnifying the cavitation.

Attempts have been made to design a kettle to avoid the formation of steam bubbles by subjecting the interior surface of the kettle to a surface treatment such that minimal, or no, surface imperfections exist. This approach eliminates the initiation sites for steam bubbles, which reduces the amount of bubbles formed, the amount of bubbles that cavitate and therefore the noise level. However, the surface finish is vulnerable to damage such as scratching etc. Yet further, following successive boiling cycles, water will leave behind a residue, which will then act as steam bubble initiation sites. Document CN 105 725 776 A discloses a noise-reducing and purifying electric kettle comprising a kettle body, a detachable kettle bottom mounted at the bottom of the kettle body, and a heating base. The kettle bottom is hermetically connected with the kettle body. A porous heat-conducting medium is arranged between the kettle bottom and the kettle body. The lower surface of the porous heat-conducting medium is in full contact with a heat-conducting surface of the kettle bottom, and the upper surface of the porous heat-conducting medium is communicated with an inner cavity of the kettle body.

### Summary of Invention

It is an object of the present invention to address the above discussed problem, or at least provide a useful alternative to the above-mentioned kettles.

In a first aspect the present invention provides a kettle according to claim 1.

Preferably, the horizontal area is in a plane below the bottom wall.

Preferably, the inner surface is generally planar and the plane is parallel to the inner surface.

Preferably, the plane is horizontal when the kettle is resting on a surface.

Preferably, the inner surface is horizontal when the kettle is resting on a surface.

Preferably, the housing is fixed to the hollow body by an adhesive located between the hollow body and the housing.

Preferably, the adhesive bonded to the sound-isolating layer.

Preferably, the heating element is retained by the sound-isolating layer such that a gap exists between the heating element and the bottom wall.

Preferably, the sound-isolating layer is formed from rubber silicone.

Preferably, the sound-absorbing layer is a foam.

Preferably, the kettle further comprises:
a base to receive the hollow body and the housing;
a controller located in the base;
a magnetic power supply located in the base; and
a receiving power module located in the housing and connected to the heating element,
wherein the magnetic power supply is configured to supply power to the receiving power module to supply power to the heating element.

Preferably, the controller is operatively connected to the heating element using a power cable to supply power to the heating element, and a communication cable to receive sensor data from the heating element.

Preferably, the base has a projection and the housing has a recess, the projection being locatable in the recess such that, when the projection is located in the recess, the magnetic power supply is aligned with receiving power module to supply power.

Preferably, the heating element occupies a horizontal area that is at least 50% of the inner surface area.

More preferably, the heating element occupies a horizontal area that is at least 70% of the area of the inner surface.

Even more preferably, the heating element occupies a horizontal area that is at least 90% of the area of the inner surface.

Preferably, the heat density provided by the heating element is between 0.1 to 0.4 W/mm² in a 100 mm² region.

Preferably, the elastic rubber mount has a shorter horizontal extent above the heating element than below the heating element.

### Brief Description of Drawings

Preferred embodiments of the present invention will now be described, by way of examples only, with reference to the accompanying drawings:
Fig. 1 is a perspective view of a kettle according to an embodiment of the present invention.

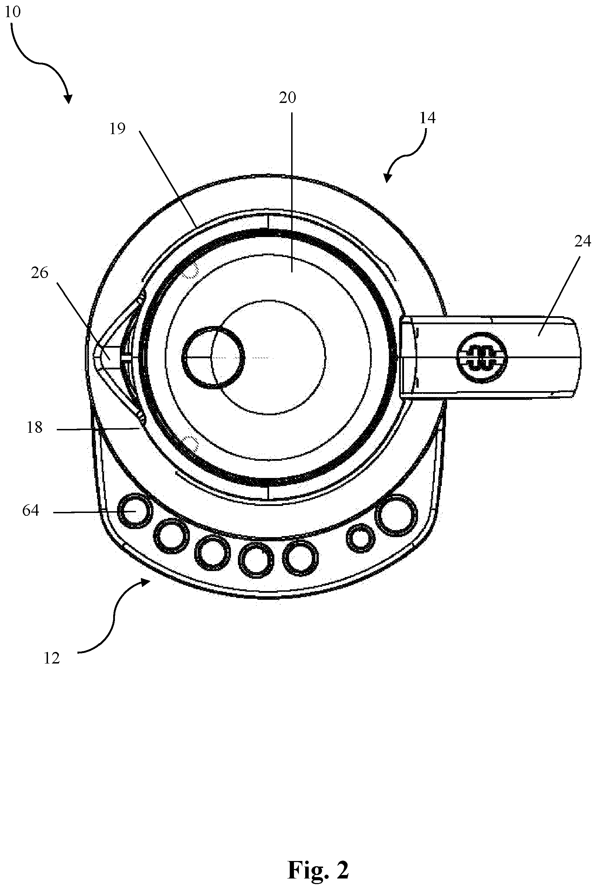

Fig. 2 is a top plan view of the kettle of Fig. 1.
Fig. 3 is a front elevation view of the kettle of Fig. 1.
Fig. 4 is a section view along the axis D-D indicated on Fig. 3 of the kettle of Fig. 1.
Fig. 5 is a partial section view of the kettle of Fig. 1 showing a TFT heating element used in the kettle of Fig. 1.

### Description of Embodiments

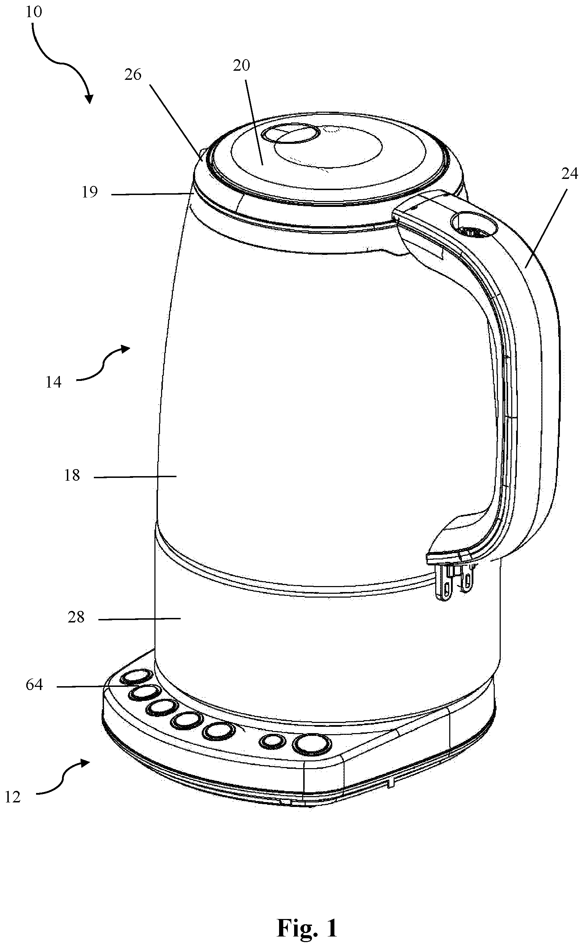

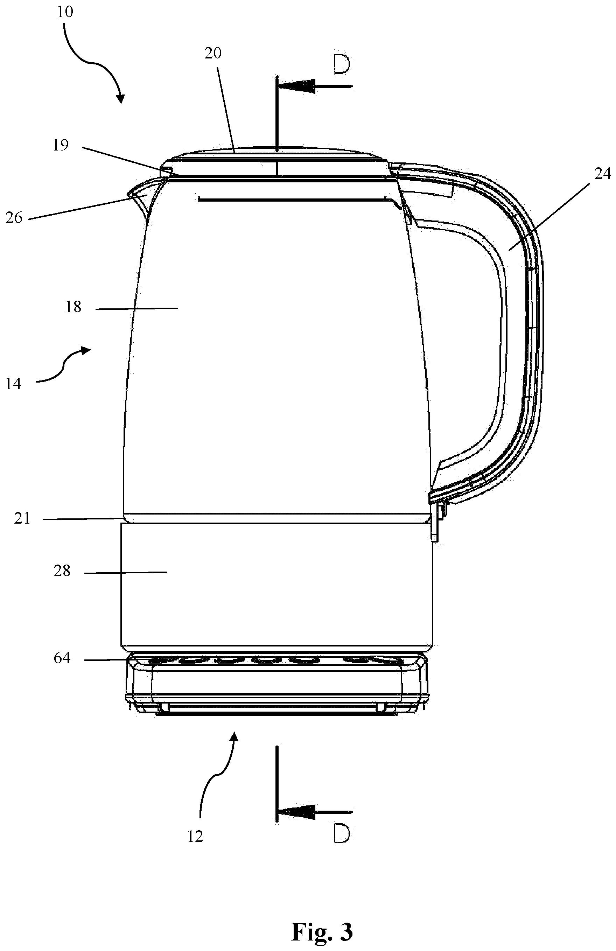

As shown in Fig. 1, a kettle 10 according to an embodiment of the present invention includes a base 12 and a hollow body 14. The hollow body 14 has a bottom wall 16 and a side wall 18 extending upwardly from the bottom wall 16 to a rim 19. The hollow body 14 also has a lid 20 to engage the rim 19. As best seen in Fig. 3, the hollow body 14 also includes a handle 24 attached to the side wall 18, and a spout 26 also attached to the side wall 18.

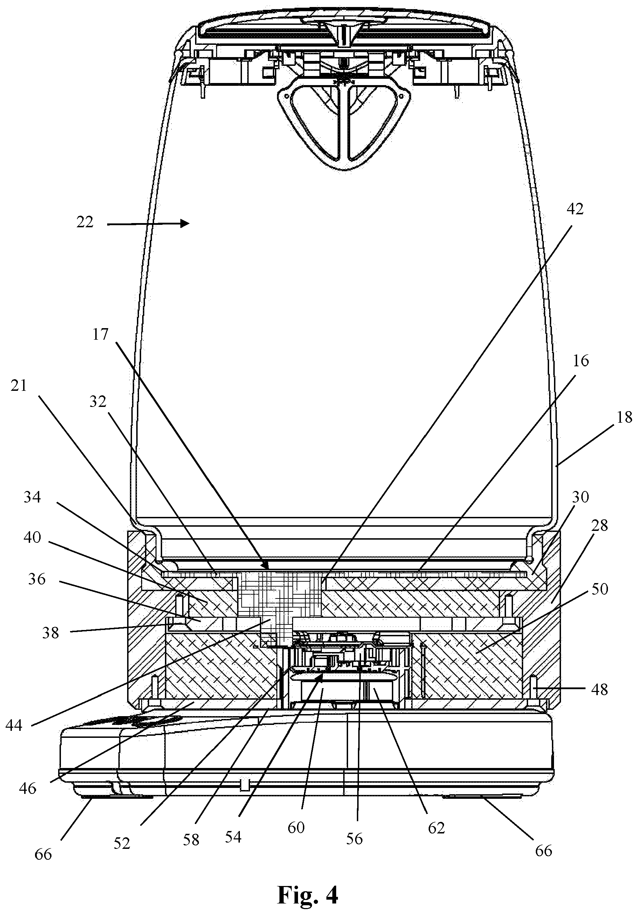

As shown in Fig. 4, the bottom wall 16, the side wall 18 and the lid 20 surround a cavity 22 to receive water to be heated. Further, the bottom wall 16 has a generally planar inner surface 17 facing the cavity 22. The inner surface 17 has an area that is substantially horizontal when the kettle 10 is resting on a surface.

As further shown in Fig. 4, the hollow body 14 also includes a housing 28 fixed to the hollow body 14. The housing 28 is separated from the hollow body 14 by a sound-isolating layer or rubber mount 30, preferably made of a silicone rubber.

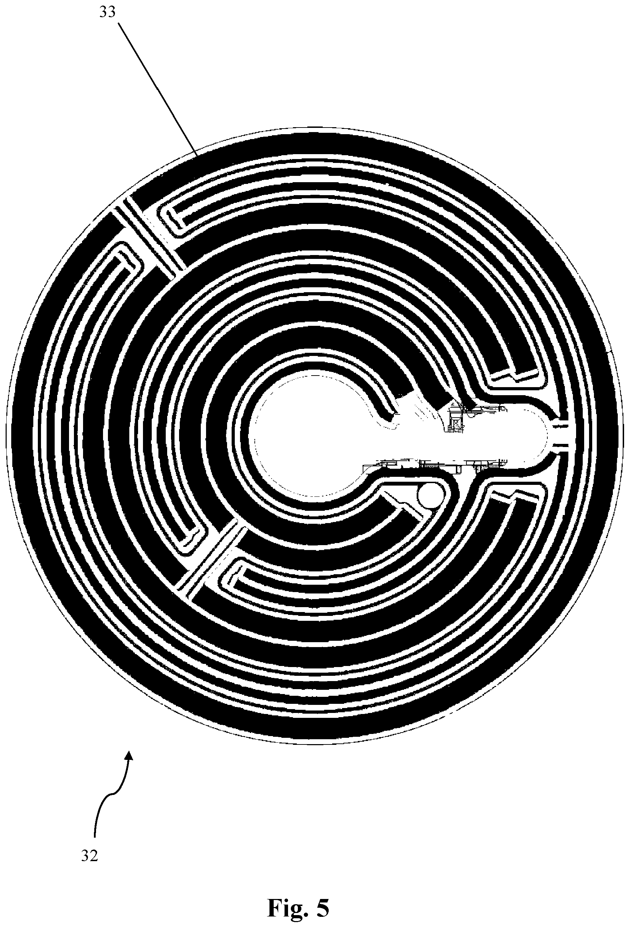

The bottom wall 16 includes a heating element 32 that occupies a horizontal area as projected, for example, onto the inner surface 17 of the bottom wall 16. For example, if the heating element 32 were a tube of 10 mm diameter and a horizontal length of 50 mm, it would occupy a horizontal area of 500 mm². In the preferred embodiment the heating element 32 is a resistive thin film transistor (TFT) element that forms substantially all of the bottom wall 16. The heating element 32 occupies a horizontal area as defined by the width and length of a trace 33, as shown in Fig. 5.

The rubber mount 30 extends below the heating element 32. The rubber mount 30 also wraps around an edge 34 of the heating element 32 such that the heating element 32 does not contact the housing 28. Yet further, the rubber mount 30 extends a short distance above the heating element 32, inwardly from the edge 34 such that the heating element 32 also does not contact the side wall 18. That is, the rubber mount 30 has a shorter horizontal extent above the heating element 32 than below the heating element 34 to ensure efficient thermal communication between the heating element 32 and water contained in the cavity 22. The rubber mount 30 also extends parallel to the side wall 18 between the side wall 18 and the housing 28, such that the housing 28 does not contact the side wall 18. The housing 28 and the rubber mount 30 are adhesively fixed to the hollow body 14, for example at lower rounded corner 21 of the side wall 18.

The housing 28 includes a first retainer 36 located below the rubber mount 30. The retainer 36 is attached to the housing 28 by a set of fasteners 38. A first sound-absorbing layer 40 is held between the rubber mount 30 and the retainer 36. The first sound-absorbing layer 40 is preferably a foam. The first sound-absorbing layer 40 includes an aperture 42 to allow access to the heating element 32. Located in the aperture 42 is a connector 44, the connector 44 includes a power cable (not shown) connected to the heating element 32.

The housing further includes a floor 46 located below the retainer 36. The floor 46 is attached to the housing 28 by a set of fasteners 48. A second sound-absorbing layer 50 is held between the retainer 36 and the floor 46. The second sound-absorbing layer 50 is preferably a foam. The floor 46 includes a recess 52 above and around which is located a chamber 54. The chamber 54 houses an electrical power receiving module 56. The power receiving module 56 is adapted to receive a sensor signal from a sensor (not shown) via the connector and is also adapted to supply power to the heating element 32 via the power cable.

The base 12 is adapted to receive the hollow body 14 and includes an upper surface 58. The upper surface 58 includes a location projection 60 adapted to be received in the recess 52, the projection 60 is a rotating electrical connector. Located in the base 12 is a power supply module 62 adapted to supply power to the power receiving module 56using the rotating electrical connector. The base 12 further includes, in this embodiment, seven buttons 64, though any number could be used, to receive instructions from a user and a controller (not shown). The buttons 64 are adapted to send a button signal to the controller. The first controller is adapted to operate the power supply module 62 in response to the button signal. The controller may also receive a sensor signal from the power receiving module 56. In response to that indication the controller is also adapted to control the supply of power to the power receiving module 56.

Finally, the base 12 includes a set of rubber feet 66 upon which the kettle 10 rests when placed on a surface (not shown).

Use of the kettle 10 will now be discussed.

The base 12 is connected to a power source (not shown), such as an outlet and the hollow body 14 is placed on the base 12. When placing the hollow body 14 on the base 12, the projection 60 is located in the recess 52. The power supply module 62 is now able to supply power to the power receiving module 56.

When the buttons 64 are operated by a user to indicate that water in the cavity 22 should be heated, the controller operates the power supply module 62 to supply power to the receiving power module 56. The receiving power module 56 subsequently supplies power to the heating element 32.

The heating element 32 is resistively heated and increases the temperature of the bottom wall 16 of the hollow body 14. The heat transfer density of the heating element 32, referring to the inner surface 17 of the bottom wall 16 is preferably between 0.1-0.4 W/mm² averaged in a, for example, 100 mm² region. The bottom wall 16 transfers hHeat is transferred from the heating element 32 to water contained in the cavity 22. As the water in the cavity 22 reaches its boiling point it starts to agitate.

The sensor, for example, provides the sensor signal to the controller indicating a water temperature. Once the water temperature reaches a pre-determined water temperature the controller ceases to supply power to the receiving power module 56.

Advantages of the kettle 10 will now be discussed.

The horizontal area occupied by the heating element 32 is a substantial portion of the inner surface area 17. Therefore, the heat transfer from the heating element 32 to the water contained in the cavity 22 occurs over a large surface area, compared with tube heating elements that were previously discussed operating on the same household wattage. By distributing the heat over a larger surface area the kettle 10 substantially reduces the likelihood that water will be heated above its boiling point, thereby reducing the likelihood that a steam bubble will form. As fewer, or no, steam bubbles are formed, no steam bubbles exist that can cavitate, which reduces, or eliminates, the noise created by steam bubble cavitation.

The hollow body 14 rests substantially on the sound-isolating rubber mount 30. As the water agitates close to its boiling point, the sound-isolating rubber mount 30 absorbs a portion of and reduces transmission of the vibration to the housing 28 and the base 12. This arrangement reduces noise created by vibrations caused by the agitation of the water.

The rubber mount 30 also retains the heating element 32. The heating element 32 may vibrate when heated, due to the use of alternating current (AC). The retention of the heating element 32 by the rubber mount 30 absorbs a portion of and reduces the transmission of these vibrations to both the cavity 22, as well as the housing 28.

The sound-absorbing foam layers 40, 50 absorb a portion of and reduce the vibrations and noise that may yet transfer through the rubber mount 30.

Together, the heating element 32, the sound-isolating rubber mount 30, and the sound-absorbing foam layers 40, 50 substantially reduce the noise produced by the kettle 10.

For example, the cross section of the heater element 32 may only overlap the cross section of the lower surface 16 by more than 70%, more than 50%, or even more than 30%.

Yet further, the heating element 32 could be a heating coil having a path and a width in the horizontal plane.

Yet further, the heating element 32 may be separate and extending in a parallel horizontal plane below, but adjacent and/or attached to the bottom wall 16.

Yet further, the heating element 32 may be separate and extending in a parallel horizontal plane below, and distanced by a gap from the bottom wall 16.

## Claims

1. A kettle comprising:
a hollow body (14) having a bottom wall (16) and a side wall (18) extending upwardly from the bottom wall (16) to a rim (19), with the side wall (18) surrounding a cavity (22) to receive water to be heated, the bottom wall (16) having an inner surface (17) facing the cavity (22), the inner surface (17) having an area;
an elastic rubber mount (30);
a housing (28) fixed to the hollow body (14); and
a heating element (32) in thermal communication with the bottom wall (16) to thereby heat the water, wherein the elastic rubber mount (30) wraps around an edge (34) of the heating element (32) such that the heating element (32) does not contact the housing (28);
wherein the elastic rubber mount (30) is located between the side wall (18) and the housing (28), and surrounds the bottom wall 16); and
wherein the elastic rubber mount (30) comprises a sound-isolating layer, and the housing (28) further comprises a sound-absorbing layer (40) located below the sound-isolating layer;
wherein the hollow body (4) rests on the elastic rubber mount (30); and
wherein the heating element (32) occupies a horizontal area that is at least 30% of the area of the inner surface (17).

2. The kettle of claim 1, wherein the horizontal area is in a plane below the bottom wall (16).

3. The kettle of claim 2, wherein the inner surface (17) is generally planar and the plane is parallel to the inner surface (17).

4. The kettle of claim 2, wherein the plane is horizontal when the kettle (10) is resting on a surface.

5. The kettle of claim 1, wherein the inner surface (17) is horizontal when the kettle is resting on a surface.

6. The kettle of claim 1, wherein the housing (28) is fixed to the hollow body (14) by an adhesive located between the hollow body (14) and the housing (28).

7. The kettle of claim 6, wherein the adhesive is bonded to the sound-isolating layer.

8. The kettle of claim 1, wherein the heating element (32) is retained by the sound-isolating layer such that a gap exists between the heating element (32) and the bottom wall (16).

9. The kettle of claim 1, wherein the sound-isolating layer is formed from rubber silicone.

10. The kettle of claim 1, wherein the sound-absorbing layer is a foam.

11. The kettle of claim 1, wherein the kettle (10) further comprises:
a base (12) to receive the hollow body (14) and the housing (28);
a controller located in the base (12);
a magnetic power supply located in the base (12); and
a receiving power module (56) located in the housing (28) and connected to the heating element (32),
wherein the magnetic power supply is configured to supply power to the receiving power module (56) to supply power to the heating element (32).

12. The kettle of claim 11, wherein the controller is operatively connected to the heating element (32) using a power cable to supply power to the heating element (32), and a communication cable to receive sensor data from the heating element (32).

13. The kettle of claim 12, wherein:
the base (12) has a projection (60) and the housing (28) has a recess (52), the projection (60) being locatable in the recess (52) such that, when the projection (60) is located in the recess (52), the magnetic power supply is aligned with receiving power module (56) to supply power.

14. The kettle of claim 1, wherein the heating element (32) occupies a horizontal area that is at least 50% of the area of the inner surface (17).

15. The kettle of claim 1, wherein the heating element (32) occupies a horizontal area that is at least 70% of the area of the inner surface (17).

16. The kettle of claim 1, wherein the heating element (32) occupies a horizontal area that is at least 90% of the area of the inner surface (17).

17. The kettle of claim 1, wherein the heat density provided by the heating element (32) is between 0.1 to 0.4 W/mm² in a 100 mm² region.

18. The kettle of claim 1, wherein the elastic rubber mount (30 has a shorter horizontal extent above the heating element (32) than below the heating element (32).

## Patentansprüche

1. Wasserkocher, umfassend:
einen Hohlkörper (14), der eine Bodenwand (16) und eine Seitenwand (18) aufweist, die sich von der Bodenwand (16) nach oben zu einem Rand (19) erstreckt, wobei die Seitenwand (18) einen Hohlraum (22) umgibt, um zu erhitzendes Wasser aufzunehmen, wobei die Bodenwand (16) eine Innenoberfläche (17) aufweist, die dem Hohlraum (22) zugewandt ist, wobei die Innenoberfläche (17) einen Bereich aufweist;
eine elastische Gummihalterung (30);
ein Gehäuse (28), das an dem Hohlkörper (14) befestigt ist; und
ein Heizelement (32) in thermischer Kommunikation mit der Bodenwand (16), um dadurch das Wasser zu erhitzen, wobei sich die elastische Gummihalterung (30) derart um eine Kante (34) des Heizelements (32) wickelt, dass das Heizelement (32) das Gehäuse (28) nicht berührt;
wobei sich die elastische Gummihalterung (30) zwischen der Seitenwand (18) und dem Gehäuse (28) befindet und die Bodenwand 16) umgibt; und
wobei die elastische Gummihalterung (30) eine schallisolierende Schicht umfasst und das Gehäuse (28) ferner eine schallabsorbierende Schicht (40) umfasst, die sich unter der schallisolierenden Schicht befindet;
wobei der Hohlkörper (4) auf der elastischen Gummihalterung (30) aufliegt; und
wobei das Heizelement (32) einen horizontalen Bereich einnimmt, der mindestens 30 % des Bereichs der Innenoberfläche (17) beträgt.

2. Wasserkocher nach Anspruch 1, wobei sich der horizontale Bereich in einer Ebene unterhalb der Bodenwand (16) befindet.

3. Wasserkocher nach Anspruch 2, wobei die Innenoberfläche (17) im Wesentlichen eben ist und die Ebene parallel zu der Innenoberfläche (17) ist.

4. Wasserkocher nach Anspruch 2, wobei die Ebene horizontal ist, wenn der Wasserkocher (10) auf einer Oberfläche aufliegt.

5. Wasserkocher nach Anspruch 1, wobei die Innenoberfläche (17) horizontal ist, wenn der Wasserkocher auf einer Oberfläche aufliegt.

6. Wasserkocher nach Anspruch 1, wobei das Gehäuse (28) durch einen Klebstoff, der sich zwischen dem Hohlkörper (14) und dem Gehäuse (28) befindet, an dem Hohlkörper (14) befestigt ist.

7. Wasserkocher nach Anspruch 6, wobei der Klebstoff an die schallisolierende Schicht gebunden ist.

8. Wasserkocher nach Anspruch 1, wobei das Heizelement (32) durch die schallisolierende Schicht derart gehalten wird, dass zwischen dem Heizelement (32) und der Bodenwand (16) ein Spalt vorliegt.

9. Wasserkocher nach Anspruch 1, wobei die schallisolierende Schicht aus Gummisilikon ausgebildet ist.

10. Wasserkocher nach Anspruch 1, wobei die schallabsorbierende Schicht ein Schaumstoff ist.

11. Wasserkocher nach Anspruch 1, wobei der Wasserkocher (10) ferner umfasst:
eine Basis (12), um den Hohlkörper (14) und das Gehäuse (28) aufzunehmen;
eine Steuerung, die sich in der Basis (12) befindet;
eine magnetische Leistungsversorgung, die sich in der Basis (12) befindet; und
ein Aufnahmeleistungsmodul (56), das sich in dem Gehäuse (28) befindet und mit dem Heizelement (32) verbunden ist,
wobei die magnetische Leistungsversorgung konfiguriert ist, um das Aufnahmeleistungsmodul (56) mit Leistung zu versorgen, um das Heizelement (32) mit Leistung zu versorgen.

12. Wasserkocher nach Anspruch 11, wobei die Steuerung mit dem Heizelement (32) wirkverbunden ist, unter Verwendung eines Leistungskabels, um das Heizelement (32) mit Leistung zu versorgen, und eines Kommunikationskabels, um Sensordaten von dem Heizelement (32) aufzunehmen.

13. Wasserkocher nach Anspruch 12, wobei:
die Basis (12) einen Vorsprung (60) aufweist und das Gehäuse (28) eine Aussparung (52) aufweist, wobei der Vorsprung (60) in der Aussparung (52) derart eingerichtet werden kann, dass, wenn sich der Vorsprung (60) in der Aussparung (52) befindet, die magnetische Leistungsversorgung mit dem Aufnahmeleistungsmodul (56) ausgerichtet ist, um mit Leistung zu versorgen.

14. Wasserkocher nach Anspruch 1, wobei das Heizelement (32) einen horizontalen Bereich einnimmt, der mindestens 50 % des Bereichs der Innenoberfläche (17) beträgt.

15. Wasserkocher nach Anspruch 1, wobei das Heizelement (32) einen horizontalen Bereich einnimmt, der mindestens 70 % des Bereichs der Innenoberfläche (17) beträgt.

16. Wasserkocher nach Anspruch 1, wobei das Heizelement (32) einen horizontalen Bereich einnimmt, der mindestens 90 % des Bereichs der Innenoberfläche (17) beträgt.

17. Wasserkocher nach Anspruch 1, wobei die Wärmedichte, die durch das Heizelement (32) bereitgestellt wird, zwischen 0,1 bis 0,4 W/mm² in einer 100 mm²-Region liegt.

18. Wasserkocher nach Anspruch 1, wobei die elastische Gummihalterung (30 oberhalb des Heizelements (32) eine kürzere horizontale Ausdehnung als unterhalb des Heizelements (32) aufweist.

## Revendications

1. Bouilloire comprenant :
un corps creux (14) ayant une paroi inférieure (16) et une paroi latérale (18) s'étendant vers le haut à partir de la paroi inférieure (16) jusqu'à un rebord (19), la paroi latérale (18) entourant une cavité (22) destinée à recevoir de l'eau à chauffer, la paroi inférieure (16) ayant une surface intérieure (17) faisant face à la cavité (22), la surface intérieure (17) ayant une aire ;
un support élastique en caoutchouc (30) ;
un boîtier (28) fixé au corps creux (14) ; et
un élément chauffant (32) en communication thermique avec la paroi inférieure (16) pour ainsi chauffer l'eau, dans laquelle le support élastique en caoutchouc (30) s'enroule autour d'un bord (34) de l'élément chauffant (32) de telle sorte que l'élément chauffant (32) n'entre pas en contact avec le boîtier (28) ;
dans laquelle le support élastique en caoutchouc (30) est situé entre la paroi latérale (18) et le boîtier (28), et entoure la paroi inférieure (16) ; et
dans laquelle le support élastique en caoutchouc (30) comprend une couche d'isolation acoustique, et le boîtier (28) comprend en outre une couche d'absorption acoustique (40) située sous la couche d'isolation acoustique ;
dans laquelle le corps creux (4) repose sur le support élastique en caoutchouc (30) ; et
dans laquelle l'élément chauffant (32) occupe une surface horizontale qui représente au moins 30 % de l'aire de la surface intérieure (17).

2. Bouilloire selon la revendication 1, dans laquelle la zone horizontale est située dans un plan situé sous la paroi inférieure (16).

3. Bouilloire selon la revendication 2, dans laquelle la surface intérieure (17) est généralement plane et le plan est parallèle à la surface intérieure (17).

4. Bouilloire selon la revendication 2, dans laquelle le plan est horizontal lorsque la bouilloire (10) repose sur une surface.

5. Bouilloire selon la revendication 1, dans laquelle la surface intérieure (17) est horizontale lorsque la bouilloire repose sur une surface.

6. Bouilloire selon la revendication 1, dans laquelle le boîtier (28) est fixé au corps creux (14) par un adhésif situé entre le corps creux (14) et le boîtier (28).

7. Bouilloire selon la revendication 6, dans laquelle l'adhésif est collé à la couche d'isolation acoustique.

8. Bouilloire selon la revendication 1, dans laquelle l'élément chauffant (32) est retenu par la couche d'isolation acoustique de telle sorte qu'un espace existe entre l'élément chauffant (32) et la paroi inférieure (16).

9. Bouilloire selon la revendication 1, dans laquelle la couche d'isolation acoustique est formée de caoutchouc silicone.

10. Bouilloire selon la revendication 1, dans laquelle la couche d'absorption acoustique est une mousse.

11. Bouilloire selon la revendication 1, dans laquelle la bouilloire (10) comprend en outre :
une base (12) pour recevoir le corps creux (14) et le boîtier (28) ;
un dispositif de commande situé dans la base (12) ;
une alimentation magnétique située dans la base (12) ; et
un module de réception d'énergie (56) situé dans le boîtier (28) et connecté à l'élément chauffant (32),
dans laquelle l'alimentation magnétique est configurée pour alimenter le module de réception d'énergie (56) afin d'alimenter l'élément chauffant (32).

12. Bouilloire selon la revendication 11, dans laquelle le dispositif de commande est connecté de manière opérationnelle à l'élément chauffant (32) à l'aide d'un câble d'alimentation pour alimenter l'élément chauffant (32), et d'un câble de communication pour recevoir des données de capteur en provenance de l'élément chauffant (32).

13. Bouilloire selon la revendication 12, dans laquelle :
la base (12) a une saillie (60) et le boîtier (28) a un renfoncement (52), la saillie (60) pouvant être située dans le renfoncement (52) de telle sorte que, lorsque la saillie (60) est située dans le renfoncement (52), l'alimentation magnétique est alignée sur le module de réception d'énergie (56) pour l'alimentation.

14. Bouilloire selon la revendication 1, dans laquelle l'élément chauffant (32) occupe une surface horizontale qui représente au moins 50 % de l'aire de la surface intérieure (17).

15. Bouilloire selon la revendication 1, dans laquelle l'élément chauffant (32) occupe une surface horizontale qui représente au moins 70 % de l'aire de la surface intérieure (17).

16. Bouilloire selon la revendication 1, dans laquelle l'élément chauffant (32) occupe une surface horizontale qui représente au moins 90 % de l'aire de la surface intérieure (17).

17. Bouilloire selon la revendication 1, dans laquelle la densité de chaleur fournie par l'élément chauffant (32) est comprise entre 0,1 et 0,4 W/mm² dans une région de 100 mm².

18. Bouilloire selon la revendication 1, dans laquelle le support élastique en caoutchouc (30) a une extension horizontale plus courte au-dessus de l'élément chauffant (32) qu'en dessous de l'élément chauffant (32).
